# EUROPÄISCHE PATENTSCHRIFT

(11) **EP 3 102 440 B1**
(45) Veröffentlichungstag und Bekanntmachung des Hinweises auf die Patenterteilung: **18.10.2017**
(21) Anmeldenummer: 15702258.3
(22) Anmeldetag: 02.02.2015
(51) Int. Cl.: B60C 23/00

(54) **RADVENTILEINRICHTUNG MIT VENTILSCHUTZKAPPE**
WHEEL VALVE DEVICE WITH A VALVE PROTECTION FLAP
MOYEN FORMANT VALVE DE ROUE MUNI D'UN CAPUCHON DE PROTECTION DE VALVE

(30) Priorität: 03.02.2014 DE 102014101280
(43) Veröffentlichungstag der Anmeldung: 14.12.2016
(73) Patentinhaber: KNORR-BREMSE Systeme für Nutzfahrzeuge GmbH, 80809 München (DE)
(72) Erfinder: KANTOR, Kornél, H-6000 Kecskemét (HU); TOTH, Janos, H-6000 Kecskemét (HU)
(86) Internationale Anmeldenummer: PCT/EP2015/052055
(87) Internationale Veröffentlichungsnummer: WO 2015/114132

(56) Entgegenhaltungen:
- DE-A1- 3 148 729
- DE-A1-102012 005 384
- DE-U1- 8 104 435
- JP-A- H04 287 705

## Beschreibung

### GEBIET DER ERFINDUNG

Die Erfindung betrifft eine Radventileinrichtung einer Vorrichtung zur Anpassung des Ist-Reifendrucks mindestens eines Reifens eines Rads an einen aktuellen Soll-Reifendruck, mit einem an einem Gehäuse ausgebildeten Speiseanschluss, in welchen entweder der aktuelle Soll-Reifendruck eingesteuert wird, um den Ist-Reifendruck an den Soll-Reifendruck anzupassen, oder welcher entlüftet wird, wenn der Ist-Reifendruck dem Soll-Reifendruck entspricht, einem mit einem Reifeninnenraum in Verbindung stehenden, mit dem Ist-Reifendruck belasteten und am Gehäuse ausgebildeten Arbeitsanschluss, mindestens einem einen beweglichen und mit einem Ventilsitz zusammenwirkenden Ventilkörper aufweisenden Sitzventil, welches eine den Speiseanschluss mit dem Arbeitsanschluss verbindende Öffnungsstellung und eine diese Verbindung sperrende Schließstellung aufweist, wobei in Schließstellung des Sitzventils eine durch den am Speiseanschluss anstehenden Druck belastete erste Wirkfläche den Ventilkörper gegen die Wirkung von Federmitteln in Öffnungsstellung des Sitzventils belastet, der Ventilkörper zusätzlich mittels mindestens einer Steuermembran steuerbar ist, einerseits stets ausschließlich durch den am Speiseanschluss anstehenden Druck gegen die Wirkung der Federmittel in Öffnungsstellung des Sitzventils und andererseits durch Atmosphärendruck belastet ist.

### HINTERGRUND DER ERFINDUNG

Fahrzeuge, die unter wesentlich unterschiedlichen Straßenverhältnissen wie befestigte Straßen, Gelände, Sand, oder Sumpf eingesetzt werden, benötigen eine Anpassung des Reifendrucks auch während der Fahrt an die unterschiedlichen Betriebsverhältnisse. Hierzu dient eine Vorrichtung zur Anpassung des Ist-Reifendrucks wenigstens eines Reifens eines Rades einer Achse eines Fahrzeugs an einen aktuellen Soll-Reifendruck, insbesondere während der Fahrt, beinhaltend eine chassisseitige Zentraleinrichtung, welche entweder den aktuellen Soll-Reifendruck in einen mit dem Rad oder der Achse mitdrehenden Speiseanschluss eines Gehäuses der achs- oder radbezogenen pneumatischen Radventileinrichtung einsteuert, um den Ist-Reifendruck an den Soll-Reifendruck anzupassen, oder diesen Speiseanschluss entlüftet, wenn der Ist-Reifendruck dem Soll-Reifendruck entspricht.

Eine gattungsgemäße Radventileinrichtung ist aus der DE 10 2012 005 384 A1 bekannt. Diese weist einen an einem Gehäuse ausgebildeten Speiseanschluss auf, in welchen entweder der aktuelle Soll-Reifendruck eingesteuert wird, um den Ist-Reifendruck an den Soll-Reifendruck anzupassen, oder welcher entlüftet wird, wenn der Ist-Reifendruck dem Soll-Reifendruck entspricht. Ferner umfasst die Radventileinrichtung ein mit einem Reifeninnenraum in Verbindung stehenden, mit dem Ist-Reifendruck belasteten und am Gehäuse ausgebildeten Arbeitsanschluss. Mindestens ein mit einem Ventilsitz zusammenwirkendes Sitzventil, das einen beweglichen Ventilkörper aufweist, verbindet in einer Öffnungsstellung den Speiseanschluss mit dem Arbeitsanschluss. In einer Schließstellung des Sitzventils belastet eine durch den am Speiseanschluss anstehenden Druck belastete erste Wirkfläche den Ventilkörper gegen die Wirkung von Federmitteln in Öffnungsstellung des Sitzventils. Der Ventilkörper ist zusätzlich mittels mindestens einer Steuermembran steuerbar, welche einerseits stets ausschließlich durch den am Speiseanschluss anstehenden Druck gegen die Wirkung der Federmittel in Öffnungsstellung des Sitzventils und andererseits durch Atmosphärendruck belastet ist.

Nachteilig an dieser Lösung ist, dass die Bewegung der Steuermembran und somit die Bewegung des Ventilkörper sehr empfindlich gegenüber äußeren Einwirkungen wie beispielsweise durch Schlamm, Wasser, Eis und Schnee ist. Durch grobe Verschmutzungen oder erhöhte Feuchtigkeit kann der Betrieb der Radventileinrichtung massiv gestört werden. Aufgrund der Ansteuerung des Ventilkörpers durch die Steuermembran, ist die Einwirkung des Atmosphärendrucks als Referenzdruck auf die Steuermembran unerlässlich.

Ferner offenbart die US 5,309,969 eine Vorrichtung zum Einstellen des Luftdrucks in einem Fahrzeugreifen. Diese Vorrichtung weist ebenfalls einen Ventilkörper auf, der mit einer Membran in Verbindung steht. Zum Schutz gegen Schmutz und Feuchtigkeit ist die Entlüftung der einen Membranseite durch gemeinsame Entlüftungsstutzen verwirklicht, wobei aber abhängig von den aktuellen Strömungen kein ständiger Atmosphärendruck gesichert ist.

Eine Anordnung eines Deckels an das Gehäuse der aus der DE 10 2012 005 384 A1 bekannten Radventileinrichtung würde die Einwirkung des Atmosphärendrucks auf die Steuermembran verhindern, wodurch der Betrieb der Radventileinrichtung massiv gestört werden würde. Darüber hinaus könnte sich in dem Raum zwischen Steuermembran und Deckel ein Druck aufbauen, der einen sicheren Betrieb der Radventileinrichtung negativ beeinflusst.

### OFFENBARUNG DER ERFINDUNG

Es ist daher die Aufgabe der vorliegenden Erfindung die Zuverlässigkeit und Funktionsfähigkeit einer Radventileinrichtung auch bei einem Off-Road-Betrieb des Fahrzeugs unter Einwirkung von Schlamm, Wasser, Eis und Schnee zu erhöhen.

Die Aufgabe wird ausgehend von einer Radventileinrichtung gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß kommt eine Ventilschutzkappe zur Abdeckung der mindestens einen Steuermembran und des Ventilkörpers an dem Gehäuse oder an einem am Gehäuse angeordneten Ring zur Anlage, wobei die Ventilschutzklappe mindestens eine durch ein Entlüftungselement abgedeckte Aussparung aufweist, um die Belastung der wenigstens einen Steuermembran durch den Atmosphärendruck zu gewährleisten. Die Ventilschutzkappe verhinder somit das Eindringen von groben Schmutz und Feuchtigkeit und schütz dadurch die Steuermembran und den Ventilkörper, insbesondere im Off-Road-Betrieb des Fahrzeugs. Die mindestens eine durch das Entlüftungselement abgedeckte Aussparung erlaubt die Einwirkung des Atmosphärendrucks auf die Steuermembran. Das Entlüftungselement ist dabei derart ausgebildet, dass ein Eindringen von Feuchtigkeit und feinem Schmutz verhindert wird, wobei eine Luftdurchlässigkeit gegeben ist. Vorteilhafterweise weist die Ventilschutzkappe nur eine zentral angeordnete Aussparung auf. Es ist jedoch auch denkbar mehrere Aussparungen in die Ventilschutzkappe auszubilden oder die Ventilschutzkappe siebähnlich mit einer Vielzahl von Aussparungen auszubilden.

Vorzugsweise umfasst das Entlüftungselement eine luftdurchlässige Membran zur Ausströmung von Luft, wobei diese aus einem Polymer, insbesondere Polytetrafluorethylen, ausgebildet ist. Zur Luftdurchlässigkeit ist die Membran porös ausgebildet.

Polytetrafluorethylen ist auch unter dem Namen Teflon bekannt und weist aufgrund der porösen Ausbildung eine ausreichende Luftdurchlässigkeit auf, verhindert aber sicher ein Eindringen von Schmutzpartikeln und starker Feuchtigkeit in Form von Flüssigkeit.

Die Erfindung schließt die technische Lehre ein, dass das Entlüftungselement an einer nach innen gerichteten Stirnfläche der Ventilschutzkappe axial zur Anlage kommt und zumindest lösbar mit der Ventilschutzkappe verbunden ist. Beispielsweise kann das Entlüftungselement über eine Schraubverbindung mit der Ventilschutzkappe verbunden sein. Es ist aber auch denkbar, das Entlüftungselement an die Ventilschutzkappe zu kleben oder durch einen Klettverschluss anzubringen, so dass ein Austausch des verschmutzten Entlüftungselements auf einfache Weise realisierbar ist.

Gemäß einem bevorzugten Ausführungsbeispiel ist die Ventilschutzkappe topfförmig ausgebildet. Dadurch erlaubt die Ventilschutzkappe ein axiales Bewegen des Ventilkörpers. Mit anderen Worten ist die Verschlussklappe zylindrisch ausgebildet und weist eine Mantelfläche und eine senkrecht dazu angeordnete kreisförmige Grundfläche auf. Die Mantelfläche kommt stirnseitig am Gehäuse oder am Ring zur Anlage. Die Grundfläche weist die mindestens eine Aussparung, die durch das Entlüftungselement abgedeckt ist, auf.

Gemäß einem Weiteren Ausführungsbeispiel ist die Ventilschutzkappe über Verbindungsmittel zumindest lösbar am Gehäuse oder am Ring befestigt. Vorteilhafterweise kann die Ventilschutzkappe aber auch durch Schweißen, Löten oder Kleben am Gehäuse oder am Ring befestigt werden.

Vorzugsweise weist die Ventilschutzkappe eine radial nach außen ausgebildete Lippe zur axialen Anlage am Gehäuse oder am Ring auf. Diese Lippe dient insbesondere als breitere Auflagefläche am Gehäuse oder am Ring und erleichtert das lösbare Anbringen der Ventilschutzkappe am Gehäuse oder am Ring, insbesondere durch Schraubelemente.

Besonders bevorzugt ist zwischen der Ventilschutzkappe und dem Gehäuse oder dem Ring ein Dichtelement angeordnet. Das Dichtelement ist vorteilhafterweise als Dichtring ausgebildet und dient, insbesondere bei einer lösbaren Verbindung, beispielsweise durch Schraubelemente, einer sicheren Abdichtung gegen Feuchtigkeit und feinsten Partikeln.

Gemäß einem Weiteren Ausführungsbeispiel sind die Ventilschutzkappe und der Ring als ein Bauteil ausgebildet. Mit anderen Worten weist die Ventilschutzkappe den am Gehäuse zur Anlage kommenden Ring auf. Dieser Ring dient insbesondere zur Fixierung der Steuermembran am Gehäuse.

### KURZE BESCHREIBUNG DER ZEICHNUNGEN

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
- Fig.1: eine schematische Querschnittdarstellung einer erfindungsgemäßen Radventileinrichtung mit einer Ventilschutzkappe gemäß einem bevorzugten Ausführungsbeispiel, und
- Fig.2: eine schematische Querschnittdarstellung der teilweise dargestellten Radventileinrichtung aus Figur 1 mit der Ventilschutzkappe gemäß einem weiteren Ausführungsbeispiel.

### DETAILLIERTE BESCHREIBUNG EINER BEVORZUGTEN AUSFÜHRUNGSFORM

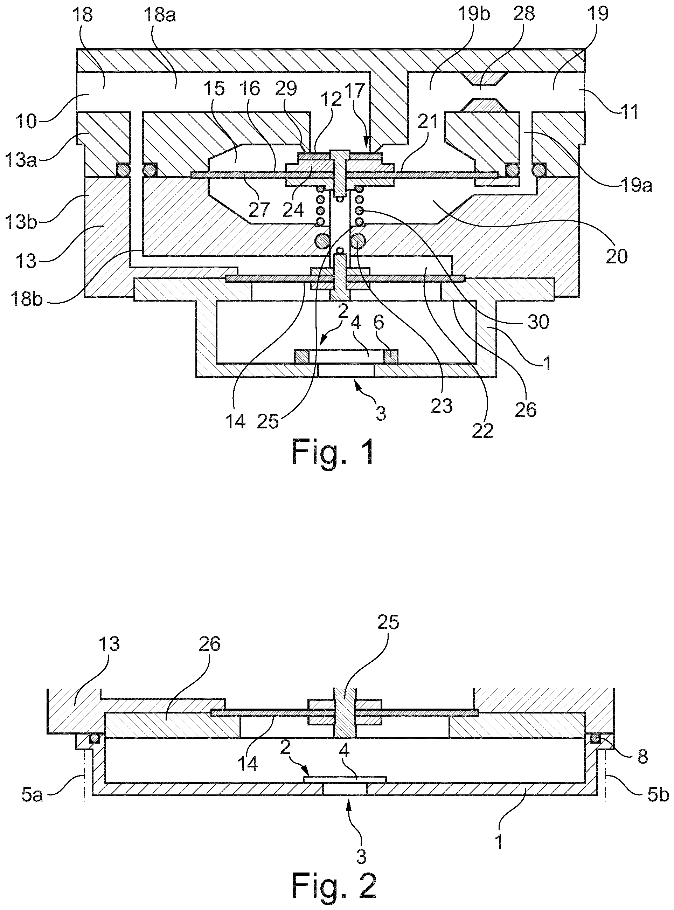

Nach Figur 1 weist die Radventileinrichtung 6 einen Speiseanschluss 10 an einem Gehäuse 13 auf. In den Speiseanschluss 10 wird entweder ein aktueller Soll-Reifendruck von einer - hier nicht dargestellten - Zentraleinrichtung eingesteuert, um einen Ist-Reifendruck an den Soll-Reifendruck anzupassen, oder der Speiseanschluss 10 wird von der Zentraleinrichtung entlüftet, wenn der Ist-Reifendruck dem Soll-Reifendruck innerhalb einer vorgegebenen Toleranz entspricht. Am Gehäuse 13 der Radventileinrichtung 6 ist weiterhin ein mit einem Reifeninnenraum eines - hier nicht dargestellten - Reifens über eine - hier nicht dargestellten - Leitung in Verbindung stehende und mit dem Ist-Reifendruck belastete Arbeitsanschluss 11 ausgebildet.

Die Radventileinrichtung 6 umfasst einen beweglichen und mit einem Ventilsitz 29 zusammenwirkenden Ventilkörper 24 aufweisendes Sitzventil 17, welches eine den Speiseanschluss 10 mit dem Arbeitsanschluss 11 verbindende Öffnungsstellung und eine diese Verbindung sperrende Schließstellung aufweist. In fig. 2 ist die Schließstellung des Sitzventils 17 gezeigt. in Schließstellung des Sitzventils 17 spannt eine durch den am Speiseanschluss 10 anstehenden und mittels eines Zweigs 18a eines im Gehäuse 13 ausgebildeten Kanals 18 geleiteten Druck belastete erste Wirkfläche 12 den Ventilkörper 24 gegen die Wirkung einer Feder 30 in Öffnungsstellung des Satzventils 17, wie anhand von fig. 2 leicht vorstellbar ist. Die Feder 30 ist einerseits am Ventilkörper 24 und andererseits am Gehäuse 13 abgestützt.

Weiterhin wird der Ventilkörper 24 von einer zweiten Wirkfläche 21 und einer dritten Wirkfläche 27 durch den am Speiseanschluss 11 und über einen weiteren Kanal 19 im Gehäuse 13 herangeführten Ist-Reifendruck belastet. Hierbei spannt die zweite Wirkfläche 21 den Ventilkörper 24 in Öffnungsstellung des Sitzventils 17 und die dritte Wirkfläche 27 den Ventilkörper 24 in Schließstellung des Sitzventils 17.

Weiterhin werden die zweite Wirkfläche 21 und die dritte Wirkfläche 27 beispielsweise durch radial äußere Ringflächen einer in Öffnungs- und Schließrichtung des Sitzventils 17 beweglichen Membran 16 gebildet, wobei ein radial innerer Bereich der Membran 16 den Ventilkörper 24 trägt. Dabei begrenzt die zweite Wirkfläche 21 der Membran 16 eine zweite Kammer 15 des Gehäuses 13, welche mit dem Arbeitsanschluss 11 mittels eines bevorzugt eine Drossel 28 beinhaltenden Zweigs 19b des Kanals 19 in Verbindung steht. Die dritte Wirkfläche 27 der Membran 16 begrenzt eine dritte Kammer 20 des Gehäuses 13, welche mit dem Arbeitsanschluss 11 über einen weiteren Zweig 19a des Kanals 19 ungedrosselt in Verbindung steht. Dabei ist ein radial äußerer Rand der Membran 16 zwischen zwei Gehäusehälften 13a, 13b des Gehäuses 13 fixiert.

Zusätzlich ist der Ventilkörper 24 des Sitzventils 17 mittels einer Steuermembran 14 steuerbar, welche einerseits stets ausschließlich durch den am Speiseanschluss 10 anstehenden Druck gegen die Wirkung der Feder 30 in Öffnungsstellung des Sitzventils 17 und andererseits durch Atmosphärendruck in Schließstellung des Sitzventils 17 belastet ist. Besonders bevorzugt begrenzt die Steuermembran 14 eine Steuerkammer 22, welche mit dem Speiseanschluss 10 über einen Zweig 18b des Kanals 18 in Verbindung steht. Der Zweig 18b des Kanals 18 dient daher ausschließlich zur Zu- oder Abfuhr von Steuerluft in die oder aus der Steuerkammer 22.

Weiterhin ist ein radial äußerer Rand der Steuermembran 14 mittels eines Rings 26 am Gehäuse 13 fixiert. Dieser Ring 26 lässt mittels einer mittigen Öffnung eine Belastung der Steuermembran 14 durch den Atmosphärendruck zu, um den Ventilkörper 24 über einen Ventilstößel 25 in Schließstellung zu belasten. Hierzu ist die Steuermembrane 14 mit dem im Gehäuse 13 beweglich gelagerten Ventilstößel 25 einendseitig zentral verbunden, welcher wiederum mit dem Ventilkörper 24 anderendseitig verbunden ist.

Eine erste Wirkfläche 12 für den am Speiseanschluss 10 anstehenden und durch den Zweig 18a herangeführten Druck wird bevorzugt durch einen in Bezug zum Ventilsitz 29 radial inneren Teil einer Oberfläche des Ventilkörpers 24 gebildet, welcher eine mit dem Speiseanschluss 10 verbundene erste Kammer 18a des Gehäuses 13 begrenzt, die vorzugsweise direkt durch den Zweig 18a des Kanals 18 gebildet wird. Der Zweig 18a des Kanals 18 führt die zum Einstellen des Soll-Reifendrucks notwendige Luft.

Besonders bevorzugt ist die dritte Kammer 20 gegenüber der Steuerkammer 22 abgedichtet. Dies ist beispielsweise dadurch realisiert, dass der Ventilstößel 25 eine Durchgangsbohrung in einer zwischen der Steuerkammer 22 und der dritten Kammer 20 ausgebildeten Trennwand des Gehäuses 13 durchragt, welche mittels einer Dichtung 23 abgedichtet ist. Der Ventilstößel 25 durchragt dabei die dritte Kammer 20 und ist am Ventilkörper 24 zentral befestigt.

Zur Abdeckung der Steuermembran 14 und des Ventilkörpers 24 weist der am Gehäuse 13 angeordneten Ring 26 eine topfförmige Ventilschutzkappe 1 zum Schutz der Steuermembran 14 und des Ventilkörpers 24 gegen Schmutz und Feuchtigkeit auf. An der Ventilschutzklappe 1 ist eine durch ein Entlüftungselement 2 abgedeckte Aussparung 3 ausgebildet, um die Belastung der Steuermembran 14 durch den Atmosphärendruck zu gewährleisten. Das Entlüftungselement 2 kommt axial an einer nach innen gerichteten Stirnfläche der Ventilschutzkappe 1 zur Anlage und umfasst eine luftdurchlässige Membran 4 aus Teflon, insbesondre zur Ausströmung von Luft aus einem zwischen Steuermembran 14 und Ventilschutzkappe 1 ausgebildeten Raum. Ferner umfasst das Entlüftungselement 2 einen Rahmen 6, an dem die Membran 4 aufgespannt ist. Dadurch ist gewährleistet, dass weder Schmutz noch Feuchtigkeit eindringen können und der Atmosphärendruck auf die Steuermembran 14 einwirken kann. Das Entlüftungselement 2 ist durch eine Klebeverbindung mit der Ventilschutzkappe 1 verbunden. Trotz Abdeckung durch die Ventilschutzkappe 1 ist einem Druckanstieg durch beispielsweise Leckagen in der Steuermembran 14 in dem zwischen Ventilschutzkappe 1 und Steuermembran 14 angeordneten Raum durch die Aussparung 3 in der Ventilschutzkappe 1 entgegengewirkt.

Gemäß Figur 2 weist die Ventilschutzkappe 1 eine radial nach außen ausgebildete Lippe 7 zur axialen Anlage am Gehäuse 13 auf. Axial zwischen dem Gehäuse 13 und der Lippe 7 ist ein Dichtelement 8 in einer an der Lippe 7 ausgebildeten Aussparung angeordnet. Ferner ist die Ventilschutzkappe 1 über Schraubelemente 5a, 5b lösbar am Gehäuse 13 befestigt.

### Bezugszeichenliste

- 1: Ventilschutzkappe
- 2: Entlüftungselement
- 3: Aussparung
- 4: Membran
- 5a, 5b: Schraubelement
- 6: Rahmen
- 7: Lippe
- 8: Dichtelement
- 10: Speiseanschluss
- 11: Arbeitsanschluss
- 12: erste Wirkfläche
- 13: Gehäuse
- 13a, 13b: Gehäuseteil
- 14: Steuermembran
- 15: zweite Kammer
- 16: Membran
- 17: Sitzventil
- 18: Kanal
- 18a, 18b: Zweig
- 19: Kanal
- 19a, 19b: Zweig
- 20: dritte Kammer
- 21: zweite Wirkfläche
- 22: Steuerkammer
- 23: Dichtung
- 24: Ventilkörper
- 25: Ventilstößel
- 26: Ring
- 27: dritte Wirkfläche
- 28: Drossel
- 29: Ventilsitz
- 30: Feder

## Patentansprüche

1. Mit einem Rad oder einer Achse eines Fahrzeugs mitdrehende Radventileinrichtung (6) einer Vorrichtung zur Anpassung des Ist-Reifendrucks mindestens eines Reifens des Rads an einen aktuellen Soll-Reifendruck, mit einem an einem Gehäuse (13) ausgebildeten Speiseanschluss (10), in welchen entweder Druck eingesteuert wird, um den Ist-Reifendruck an den Soll-Reifendruck anzupassen, oder welcher entlüftet wird, wenn der Ist-Reifendruck dem Soll-Reifendruck entspricht, einem mit einem Reifeninnenraum in Verbindung stehenden, mit dem Ist-Reifendruck belasteten und am Gehäuse (13) ausgebildeten Arbeitsanschluss (11), mindestens einem einen beweglichen und mit einem Ventilsitz (29) zusammenwirkenden Ventilkörper (24) aufweisenden Sitzventil (17), welches eine den Speiseanschluss (10) mit dem Arbeitsanschluss (11) verbindende Öffnungsstellung und eine diese Verbindung sperrende Schließstellung aufweist, wobei in Schließstellung des Sitzventils (17) eine durch den am Speiseanschluss (10) anstehenden Druck belastete erste Wirkfläche (12) den Ventilkörper (24) gegen die Wirkung von Federmitteln (30) in Öffnungsstellung des Sitzventils (17) belastet, der Ventilkörper (24) zusätzlich mittels mindestens einer Steuermembran (14) steuerbar ist, welche einerseits stets ausschließlich durch den am Speiseanschluss (10) anstehenden Druck gegen die Wirkung der Federmittel (30) in Öffnungsstellung des Sitzventils (17) und andererseits durch Atmosphärendruck belastet ist,
**dadurch gekennzeichnet, dass** eine Ventilschutzkappe (1) zur Abdeckung der mindestens einen Steuermembran (14) und des Ventilkörpers (24) an dem Gehäuse (13) oder an einem am Gehäuse (13) angeordneten Ring (26) zur Anlage kommt, wobei die Ventilschutzklappe (1) mindestens eine durch ein Entlüftungselement (2) abgedeckte Aussparung (3) aufweist, um die Belastung der wenigstens einen Steuermembran (14) durch den Atmosphärendruck zu gewährleisten.

2. Radventileinrichtung nach Anspruch 1,
**dadurch gekennzeichnet, dass** das Entlüftungselement (2) eine luftdurchlässige Membran (4) zur Ausströmung von Luft umfasst.

3. Radventileinrichtung nach Anspruch 2,
**dadurch gekennzeichnet, dass** die Membran (4) aus einem Polymer, insbesondere Polytetrafluorethylen, ausgebildet ist.

4. Radventileinrichtung nach Anspruch 1,
**dadurch gekennzeichnet, dass** das Entlüftungselement (2) an einer nach innen gerichteten Stirnfläche der Ventilschutzkappe (1) axial zur Anlage kommt und zumindest lösbar mit der Ventilschutzkappe (1) verbunden ist.

5. Radventileinrichtung nach Anspruch 1,
**dadurch gekennzeichnet, dass** die Ventilschutzkappe (1) topfförmig ausgebildet ist.

6. Radventileinrichtung nach Anspruch 1,
**dadurch gekennzeichnet, dass** die Ventilschutzkappe (1) eine radial nach außen ausgebildete Lippe (7) zur axialen Anlage am Gehäuse (13) und/oder am Ring (26) aufweist.

7. Radventileinrichtung nach Anspruch 1,
**dadurch gekennzeichnet, dass** zwischen der Ventilschutzkappe (1) und dem Gehäuse (13) und/oder dem Ring (26) ein Dichtelement (8) angeordnet ist.

8. Radventileinrichtung nach Anspruch 1,
**dadurch gekennzeichnet, dass** die Ventilschutzkappe (1) über Verbindungsmittel am Gehäuse (13) und/oder am Ring (26) befestigt ist.

9. Radventileinrichtung nach Anspruch 1,
**dadurch gekennzeichnet, dass** die Ventilschutzkappe (1) und der Ring (26) als ein Bauteil ausgebildet sind.

10. Radventileinrichtung nach Anspruch 2,
**dadurch gekennzeichnet, dass** das Entlüftungselement (2) einen Rahmen (6) umfasst, an dem die Membran (4) aufgespannt ist.

## Claims

1. Wheel valve device (6), rotating with a wheel or an axle of a vehicle, of a device for matching the actual tyre pressure of at least one tyre of the wheel to a current target tyre pressure, the device (6) comprising a feed port (10) formed on a housing (13), into which either a controlled pressure is fed for matching the actual tyre pressure to the target tyre pressure, or which is vented if the actual tyre pressure corresponds to the target tyre pressure, further comprising a working port (11) connected to a tyre interior, loaded with the actual tyre pressure and formed on the housing (13), and further comprising at least one seating valve (17), which comprises a movable valve body (24) acting together with a valve seat (19) and which has an open position connecting the feed port (10) to the working port (11) and a closed position blocking this connection, wherein in the closed position of the seating valve (17) a first active area (12) loaded by the pressure applied to the feed port (10) loads the valve body (24) towards the open position of the seating valve (17) against the action of spring means (30), and the valve body (24) is in addition controllable by means of at least one control diaphragm (14), which on the one hand is always exclusively loaded by the pressure applied to the feed port (10) towards the open position of the seating valve (17) against the action of the spring means (30) and which is on the other hand loaded by atmospheric pressure,
**characterised in that** a protective valve cap (1) comes into contact with the housing (13) or with a ring (26) on the housing (13) to cover the at least one control diaphragm (14) and the valve body (24), the protective valve cap (1) having at least one recess (3) covered by a venting element (2) in order to ensure the loading of the at least one control diaphragm (14) by the atmospheric pressure.

2. Wheel valve device according to claim 1,
**characterised in that** the venting element (2) comprises an air-permeable diaphragm (4) for the outflow of air.

3. Wheel valve device according to claim 2,
**characterised in that** the diaphragm (4) is formed from a polymer, in particular polytetrafluoroethylene.

4. Wheel valve device according to claim 1,
**characterised in that** the venting element (2) axially comes into contact with an inward-oriented end face of the protective valve cap (1) and is at least releasably joined to the protective valve cap (1).

5. Wheel valve device according to claim 1,
**characterised in that** the protective valve cap (1) is of a pot-shaped design.

6. Wheel valve device according to claim 1,
**characterised in that** the protective valve cap (1) has a radially outward-oriented lip (7) for axial contact with the housing (13) and/or with the ring (26).

7. Wheel valve device according to claim 1,
**characterised in that** a sealing element (8) is located between the protective valve cap (1) and the housing (13) and/or the ring (26).

8. Wheel valve device according to claim 1,
**characterised in that** the protective valve cap (1) is secured to the housing (13) and/or to the ring (26) via connecting means.

9. Wheel valve device according to claim 1,
**characterised in that** the protective valve cap (1) and the ring (26) are designed as a single component.

10. Wheel valve device according to claim 2,
**characterised in that** the venting element (2) comprises a frame (6), on which the diaphragm (4) is mounted.

## Revendications

1. Dispositif (6) de valve de roue , tournant avec une roue ou un essieu d'un véhicule , d'un système d'adaptation de la pression réelle d'au moins un pneumatique de la roue à une pression instantanée de consigne du pneumatique, comprenant un raccord (10) d 'alimentation, qui est constitué sur un boîtier (13) et dans lequel ou bien de la pression est appliquée pour adapter la pression réelle du pneumatique à la pression de consigne du pneumatique, ou bien il est mis à 1 'atmosphère, si la pression réelle du pneumatique correspond à la pression de consigne du pneumatique, un raccord (11) de travail en communication avec l'espace intérieur d'un pneumatique soumis à la pression réelle du pneumatique et constitué sur le boîtier (13), au moins une soupape (17) à siège, qui a un obturateur (24) mobile coopérant avec un siège (29) de soupape et qui a une position d'ouverture mettant le raccord (10) d'alimentation en communication avec le raccord (11) de travail et une position de fermeture obturant cette communication , dans lequel , en la position de fermeture de la soupape (17) à siège , une première surface (12) active , soumise à la pression existant dans le raccord (10) d'alimentation, met l'obturateur (24), à l'encontre de l'effet de moyens (30) à ressort, dans la position d 'ouverture de la soupape (17) à siège, l'obturateur (24) pouvant être commandé , en outre, au moyen d'au moins une membrane (14) de commande , qui, d'une part , toujours exclusivement par la pression existant dans le raccord (10) d 'alimentation, est mise , à l'encontre des effets des moyens (30) à ressort , dans la position d'ouverture de la soupape (17) à siège et est soumise , d'autre part , à la pression atmosphérique ,
**caractérisé en ce qu'**une coiffe (11) de protection de soupape vient , pour recouvrir la au moins une membrane (14) de command et l'obturateur (24), sur le boîtier (13) ou sur un anneau (26) disposé sur le boîtier (13), la coiffe (11) de protection de la soupape ayant au moins un évidement (13) recouvert par un élément (2) de mise à l'atmosphère afin d 'assurer que la au moins une membrane (14) de commande soit soumise à la pression atmosphérique.

2. Dispositif de valve de roue suivant la revendication 1,
**caractérisé en ce que** 1 'élément (2) de mise à l'atmosphère comprend , pour la sortie de l'agir, une membrane (4) perméable à l'air.

3. Dispositif de valve de roue suivant la revendication 2,
**caractérisé en ce que** la membrane (4) est en un polymère, notamment en polytétrafluoroéthylène .

4. Dispositif de valve de roue suivant la revendication 1,
**caractérisé en ce que** 1 'élément (2) de mise à l'atmosphère vient en contact axialement sur une surface frontale dirigée vers l'intérieur de la coiffe (1) de protection de la soupape et est relié , au moins de manière amovible , à la coiffe (1) de protection de la soupape .

5. Dispositif de valve de roue suivant la revendication 1 ,
**caractérisé en ce que** la coiffe (1) de protection de la soupape est constituée en forme de pot.

6. Dispositif de valve de roue suivant la revendication 1 ,
**caractérisé en ce que** la coiffe (1) de protection de la soupape a une lèvre (7) constituée radialement vers l 'extérieur pour s'appliquer axialement au boîtier (13) et/ou à l'anneau (26) .

7. Dispositif de valve de roue suivant la revendication 1,
**caractérisé en ce qu'**un élément (8) d'étanchéité est disposé entre la coiffe (1) de protection de la soupape et le boîtier et/ou l'anneau (26) .

8. Dispositif de valve de roue suivant la revendication 1,
**caractérisé en ce que** la coiffe (1) de protection de la soupape est fixée au boîtier (13) et/ou à l'anneau (26) par des moyens de liaison.

9. Dispositif de valve de roue suivant la revendication 1,
**caractérisé en ce que** la coiffe (1) de protection de la soupape et l'anneau (26) sont constitués sous la forme d'une pièce.

10. Dispositif de valve de roue suivant la revendication 2,
**caractérisé en ce que** 1 'élément (2) de mise à l'atmosphère comprend un cadre (6) tendu sur la membrane (4) .
